(19) Europäisches Patentamt

European Patent Office

Office européen des brevets

(11) **EP 0 683 480 B1**

(12) **EUROPÄISCHE PATENTSCHRIFT**

(45) Veröffentlichungstag und Bekanntmachung des Hinweises auf die Patenterteilung:
**10.12.1997 Patentblatt 1997/50**

(51) Int Cl.6: **G10K 11/162**, G10K 11/16

(21) Anmeldenummer: **95104083.1**

(22) Anmeldetag: **20.03.1995**

(54) **Schallabsorber**

Sound absorber

Absorbeur du son

(84) Benannte Vertragsstaaten:
**DE ES FR IT**

(30) Priorität: **17.05.1994 DE 9408118 U**

(43) Veröffentlichungstag der Anmeldung:
**22.11.1995 Patentblatt 1995/47**

(73) Patentinhaber: **M. Faist GmbH & Co. KG**
**86381 Krumbach (DE)**

(72) Erfinder:
• **Roller, Manfred**
**D-89168 Niederstotzingen (DE)**
• **Pfaffelhuber, Klaus, Dr.**
**D-89312 Günzburg (DE)**

• **Lahner, Stefan, Dr.**
**D-86381 Krumbach (DE)**

(74) Vertreter: **Müller, Hans-Jürgen, Dipl.-Ing.**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach 101161**
**80085 München (DE)**

(56) Entgegenhaltungen:
| | |
|---|---|
| EP-A- 0 020 016 | EP-A- 0 405 581 |
| WO-A-92/00183 | DE-U- 6 948 849 |
| DE-U- 9 215 132 | GB-A- 2 038 410 |
| GB-A- 2 090 334 | US-A- 3 850 261 |

**Beschreibung**

Die Erfindung bezieht sich auf Schallabsorber mit einer Schallwellen absorbierenden Absorptionsschicht der im Anspruch 1 genannten Gattung.

Ein Schallabsorber der eingangs genannten Gattung ist bereits bekannt (GB-A-2 038 410, WO 92/00183, DE-C-2 650 886, JP-A-61 249 853, DE-C-2 408 028). Dabei sind die hohlraumartigen Kammern als Waben ausgebildet, welche als starre Wabenskelettplatte sandwichartig zwischen Abdeckplatten und gegebenenfalls äußeren Schaumschichten eingefügt ist. Die Herstellung solcher Schallabsorber ist verhältnismäßig aufwendig.

Darüber hinaus ist es auch bekannt (DE-A-3 117 368), Schaumstoffschichten mit solchen hohlraumartigen Kammern zu versehen, welche Aussparungen in der Schaumstoffschicht darstellen. Obwohl die Herstellung verhältnismäßig einfach ist, läßt die schallabsorbierende Wirkung zu wünschen übrig. Dies gilt auch für andere bekannte Fahrzeug-Schalldämmverkleidungen aus Schaumstoff (DE-U-6 948 849), bei denen die Schaumstoffschicht in größeren Abständen mit Bohrungen versehen ist, welche durch einen hautartigen Überzug abgedeckt sind. Dabei wird Wert auf eine unregelmäßige Anordnung der Bohrungen gelegt.

Schließlich ist es auch bekannt (EP-B-0 255 473, DE-U-9 215 132 und DE-C-4 334 984), auf einem plattenförmigen Träger ein Gebilde aus napfförmigen konischen Vertiefungen und Erhöhungen aufzubauen, welche zur Atmosphäre zu abgeschlossene Hohlräume bilden und als Luftfeder wirken. Das Feder-Masse-System gerät beim Auftreffen von Schallwellen in Schwingungen, wodurch Schallenergie vernichtet wird. Bei diesen napfartigen Vertiefungen und Erhöhungen befindet sich die Bauhöhe der jeweiligen Vertiefungen in der Größenordnung der Breite derselben an deren breitesten Stellen.

Der Erfindung liegt die Aufgabe zugrunde, die schallabsorbierende Wirkung auf möglichst einfache Weise insbesondere hinsichtlich der Breitbandigkeit der Absorberwirkung zu verbessern.

Die Erfindung ist in den Ansprüchen 1, 2 und 3 gekennzeichnet und in Unteransprüchen sind weitere Ausbildungen derselben beansprucht.

Den erfindungsgemäßen Ausbildungen ist gemeinsam, daß rohrförmige bzw. kanalförmige Bauteile bzw. röhrenartige Aussparungen und/oder Kanäle im Vergleich zur Breite bzw. zum Durchmesser großer Länge verwendet und mit einem offenen Ende dem Schalleinfall zugewandt sind. Die Breitbandwirkung wird überraschenderweise verbessert durch das insbesondere netzwerkartige Verbinden der Hohlräume, die von den rohr- bzw. kanalförmigen Bauteilen gebildet sind, durch Verbindungskanäle oder durch das Entkoppeln der Bauteile von Strukturelementen, welche insbesondere dem Welleneinfall zugewandt sind; dies geschieht in sehr einfacher Weise durch Anwendung der Tiefziehtechnik, wenn die Bauteile aus z.b. thermoplastischer Folie geformt werden, oder durch "Aufhängen" von schlauchartigen flexiblen Bauteilen.

Die Bauteile können in poröses Absorbermaterial eingesetzt bzw. eingearbeitet oder zwischen diesem und dem Träger derart angeordnet sein, daß die offenen Enden der rohrförmigen Bauteile dem Schalleinfall zugewandt sind. Dabei ist es auch möglich, poröses Absorbermaterial sowohl zum Abdecken der offenen Enden der rohrförmigen Bauteile als auch zum Ausfüllen der Zwischenräume zwischen benachbarten rohrförmigen Bauteilen zu verwenden. Die rohrförmigen oder schlauchartigen Bauteile können auch ohne Verwendung von porösem Absorbermaterial nebeneinander und/oder übereinander angeordnet sein, um einen Schallabsorber zu bilden. Darüber hinaus sind Mischformen möglich.

Die Röhren bilden sogenannte "Röhrenabsorber" bzw. "Kanalabsorber", die im Bereich der Impedanzminima der Öffnungen ihrer Hohlräume Schall absorbieren. So besitzt eine einseitig geschlossene zylindrische Röhre Impedanzminima bei den Wellenlängen von n x /4; dabei ist n eine ungeradzahlige Zahl 1, 3, 5 und dergleichen. Die akustische Schallenergie dringt in die Hohlräume der rohrförmigen Bauteile bzw. Kanäle ein und wird an deren geschlossenen Ende reflektiert, wodurch bei den genannten Frequenzen Maxima des Absorptionsgrads entstehen. Die Tiefe bzw. Länge L der Hohlräume in der Hauptschallwellenfortpflanzungsrichtung verhält sich zu den Wellenlängen $\lambda_n$ der Absorptionsmaxima wie folgt:

$$L = n \cdot \frac{l}{4} \; ; \qquad \lambda_n = \frac{4\,L}{n}$$

Es empfehlen sich Bauteile von mehr als dem Dreifachen, insbesondere mehr als dem Sechsfachen der Breite bzw. des Durchmessers, d.h., daß langgestreckte Röhren bzw. Kanäle Anwendung finden. Die Bauteile werden zweckmäßigerweise als Schichteneinheit auf einen Träger gesetzt oder in diesen eingearbeitet. Auch können die Bauteile eine selbsttragende Baueinheit bilden.

Die Bauteile können auch als langgestreckte Hohlzylinder ausgebildet sein. Es empfiehlt sich die Anwendung des Spritzgieß oder Tiefziehverfahrens.

Nach einer anderen bevorzugten Ausbildung, die vor allem herstellungstechnische Vorteile bietet, sind die rohrförmigen Bauteile zu einem Netzwerk vereint und als selbstständige Netzwerkschicht zwischen dem Träger und der insbesondere porösen Absorberschicht eingefügt. So ist es zweckmäßig, wesentliche Teillängen der rohrartigen Bauteile bzw. Kanäle im wesentlichen in Ebenen zu verlegen, die parallel zur Schallabsorberoberfläche verlaufen, auf die der Schall einfällt.

Die Breitbandigkeit der Absorptionswirkung läßt sich dadurch verbessern, daß die Abmessungen der rohrförmigen Bauteile insbesondere quer zur Hauptschallwellenfortpflanzungsrichtung unterschiedlich sind und/oder daß Hohlräume benachbarter rohrförmiger Bauteile akustisch untereinander verbunden sind.

Es empfiehlt sich, wenn die Absorberschicht mit einer flüssigkeitsdichten Deckschicht abgedeckt ist, um zu verhindern, daß Feuchtigkeit in den Schallabsorber eindringt und die Absorptionseigenschaften verschlechtert. Die Deckschicht kann eine dünne Kunststoffolie sein, welche schalldurchlässig ist. Es kann aber auch eine verhältnismäßig steife membranartig wirksame Deckschicht Anwendung finden, wodurch die Hohlräume im Absorber als Resonatoren wirksam werden können.

In den Zeichnungen sind bevorzugte Ausführungsbeispiele im folgenden näher beschrieben. Dabei zeigen:

Fig. 1    einen Querschnitt durch einen Röhren- bzw. Kanalabsorber;

Fig. 2    die Aufsicht auf diesen Röhren- bzw. Kanalabsorber von Fig. 1;

Fig. 3    einen Schnitt durch eine der Röhren des Absorbers;

Fig. 4    den schematischen Querschnitt durch eine andere Ausführungsart des erfindungsgemäßen Röhren- bzw. Kanalabsorbers mit porösem Absorbermaterial um die Röhren bzw. rohrförmigen Bauteile;

Fig. 5    die Aufsicht zu Fig. 4;

Fig. 6    einen Querschnitt durch einen derartigen Schallabsorber, bei dem mehrere Röhren- bzw. Kanalebenen übereinander angeordnet sind;

Fig. 7    (einen Querschnitt eines aus einer Folie tiefgezogenen Röhrenabsorbers;

Fig.8    eine Aufsicht auf den Röhrenabsorber von Fig. 8 und

Fig. 9    einen schematischen Querschnitt durch einen biegbaren Schallabsorber.

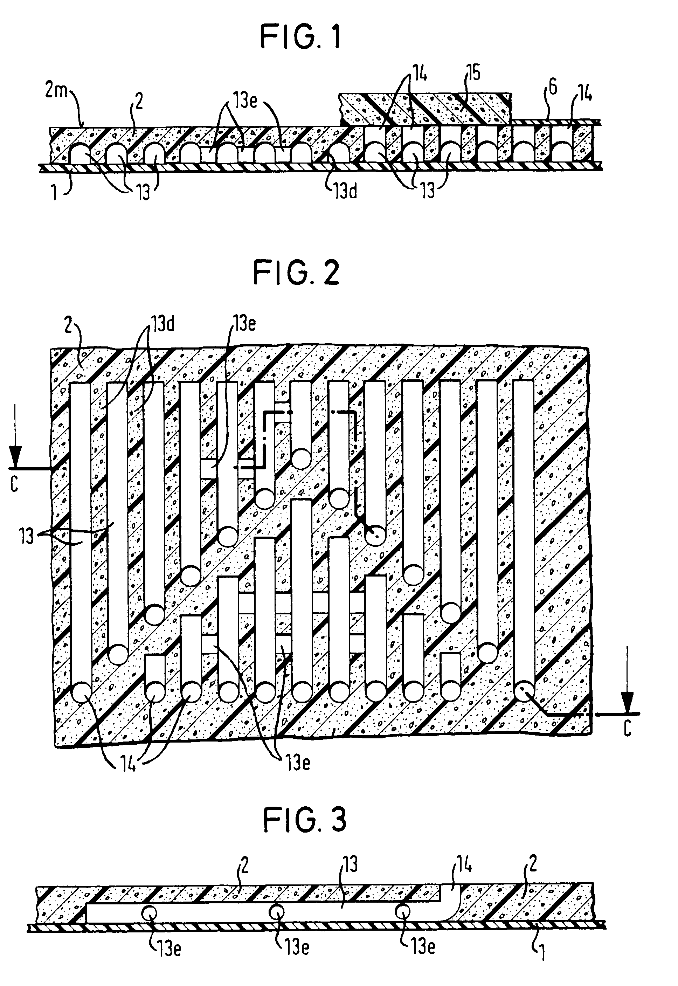

Gemäß Fig. 1 befindet sich auf dem schalenförmigen Träger 1 poröses Absorbermaterial 2, welches mit einer dünnen Folie 6 umhüllt bzw. einseitig abgedeckt sein kann. In diesem Absorber 2 sind röhrenförmige Aussparungen bzw. Kanäle 13 eingebracht, welche die o.a. Bauteile 13 bilden, obwohl sie keine selbständigen Bauteile sind, sondern von den Wänden der Kanäle im Schaumstoff des Absorbermaterials 2 gebildet werden. Durch querverbindende Öffnungen bzw. Verbindungskanäle 13e in den Trennwänden 13d zwischen benachbarten rinnenartigen Kanälen 13 ist eine Verknüpfung dieser Röhren bzw. Kanäle untereinander möglich. Jede dieser Röhren bzw. Kanäle hat eine Austrittsöffnung 14 aus dem porösen Absorbermaterial 2, welche mit einer dünnen Folie 6 aus insbesondere Polyester und/oder einem weiteren stärker porösen Absorber 15 abgedeckt sein kann. Die Bauteile 13 sind im wesentlichen parallel zur Absorberoberfläche 2m verlegt, wodurch Bautiefe eingespart wird.

Besonders augenscheinlich sind in der Fig. 2 die Austrittsöffnungen 14 aus dem Kanalsystem und die Querverbindungen bzw. Verbindungskanäle 13e der Röhren bzw. Kanäle untereinander, welche Luftdruckausgleich zulassen. Weiterhin wird daraus ersichtlich, daß die Röhren bzw. Kanäle entsprechend den Frequenzzusammenhängen unterschiedlich lang sein können.

Aus Fig. 3 ist deutlich zu erkennen, wie in den porösen Absorber 2 röhrenförmige Kanäle 13 eingebracht sind, die bis zum Träger 1 reichen; der poröse Absorber 2 ist also in gewisser definierter Weise durchlöchert.

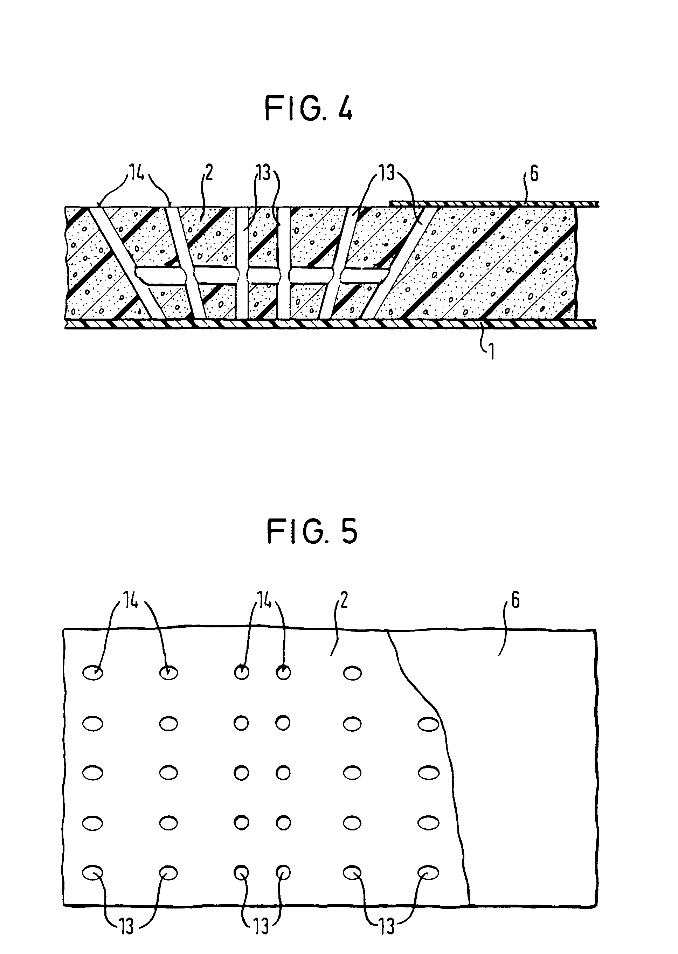

Weitere Varianten ergeben sich aus Fig. 4 und 5. Dabei können für die Kanäle bzw. Bauteile 13 verschiedene Neigungswinkel realisiert werden, um somit wieder unterschiedlich lange Röhren bei ein und derselben Absorberdicke zu erreichen. Sowohl der poröse Absorber 2 als auch die Austrittsöffnungen 14 können mit einer dünnen Folie 6 abgedeckt sein. Diese Ausbildung wird deshalb bevorzugt, weil sie trotz insgesamt gleicher Dicke bzw. Bautiefe des Röhrenabsorbers eine Schallabsorption über ein breites Frequenzband ermöglicht.

Die Kanäle bzw. Bauteile 13 können als Rinnen ausgefräst oder beim Formgeben an der Unterseite der Absorberschicht 2 eingearbeitet sein. Es empfiehlt sich, das System von Kanälen bzw. Rinnen parallel zum Träger 1 zu verlegen.

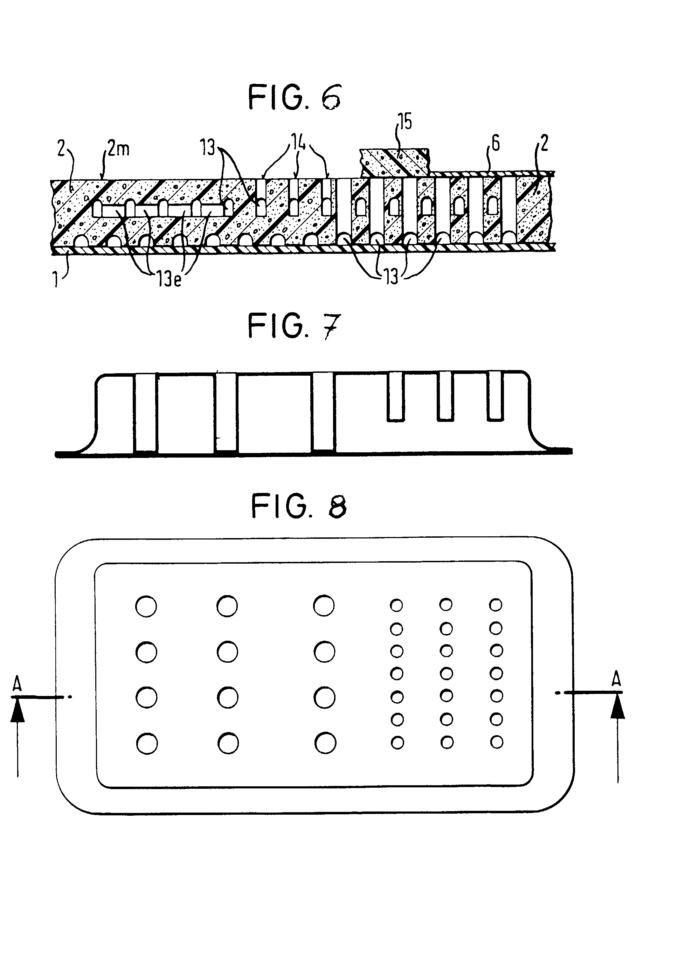

In Fig. 6 sind zwei übereinander angeordnete Ebenen von Röhren bzw. Kanälen 13 dargestellt. Dies sorgt dafür, daß auf der dem Schall zugewandten Seite 2m des porösen Absorbers eine größere Anzahl von Röhrenaustrittsöffnungen 14 vorhanden ist, was die lärmbekämpfende Wirkung des Gesamtsystems erhöht.

Fig. 7 und 8 zeigen einen aus einer Kunststoffolie tiefgezogenen Röhrenabsorber, bei dem die "Membran" zwischen den rohrförmigen Bauteilen zusätzlich schalldämmend wirksam ist.

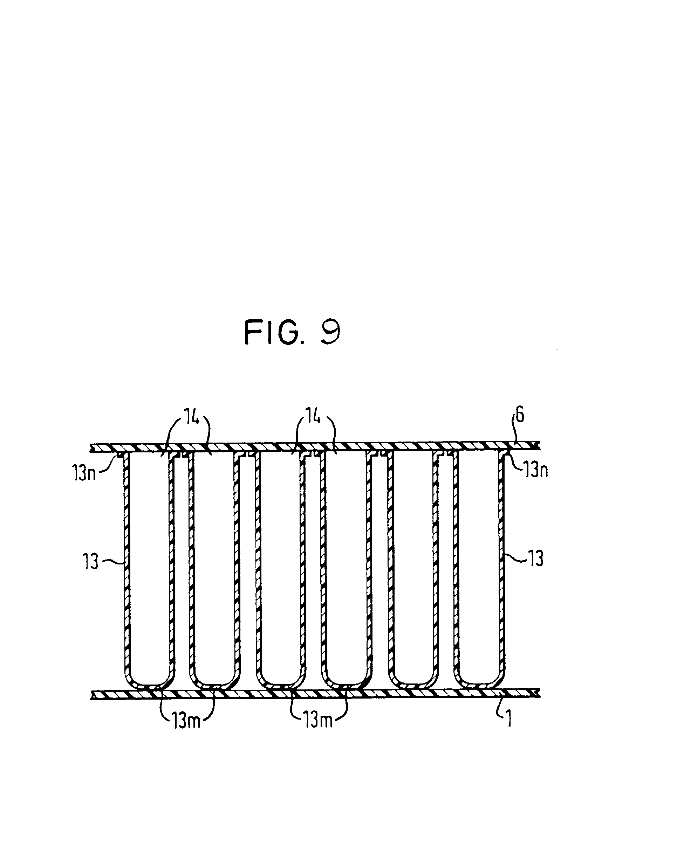

Gemäß Fig. 9 sind zahlreiche flexible und biegbare Schläuche als kanalförmige Bauteile 13 mit einem flanschartigen Rand 13n am offenen Ende 14 an der flüssigkeitsdichten Deckschicht 6 ebenfalls einer biegbaren flexiblen Folie - so befestigt, daß die Schläuche von der Deckschicht 6 nach unten hängen. Am unteren, geschlossenen Ende 13m sind die Schläuche am Träger 1 - gleichfalls z.B. als biegbare flexible Folie ausgebildet - z.B. durch Thermoschweißen befestigt. Dieser Schlauchabsorber erlaubt den Einbau in Zwischenräumen oder vor Wandteilen mit der Möglichkeit des Umlegens um Ecken und das Hineindrücken in Nischen; dabei können die Schläuche nach der Seite ausweichen. Die geschlossenen Enden 13m können auch frei beweglich sein, ohne mit dem Träger verbunden sein zu müssen.

Die Erfindung stellt eine Kombination eines Systems einseitig geschlossener Röhren insbesondere mit mindestens einer porösen Absorberschicht dar, deren schallabsorbierende Eigenschaften über die Einzelwirkungen solcher Teilschichten hinausgehen. Durch die Wahl des Materials und die geometrische Konfiguration der rohrförmigen Bauteile kann das Frequenzgebiet günstigster Absorptionswirkungen speziell bemessen werden. Dabei ist es auch möglich, in solche rohrförmige Bauteile kleinere rohrförmige Bauteile einzusetzen und/oder die Hohlräume der rohrförmigen bzw. kastenförmigen Bauteile mit schallabsorbierenden porösem Material ganz oder teilweise auszufüllen. Andererseits kann der erfindungsgemäße Röhrenabsorber auch als nur einseitig abgeschlossenes Röhrensystem ausgebildet sein, sofern dieses selbsttragend ist und von Luft umschlossen ist.

Sind die Röhren in porösem Absorbermaterial angeordnet, dann empfiehlt es sich, den durchschnittlichen Abstand der offenen Enden derselben an der Absorberoberfläche zwischen dem Zweifachen und dem Zehnfachen des Durchmessers zu wählen; besonders günstig ist ein Abstand-Durchmesser-Verhältnis benachbarter Öffnungen zwischen 2 und 6.

Bevorzugte Anwendungen ergeben sich im Maschinen- und Gebäudebau, insbesondere im Fahrzeugbau.

**Patentansprüche**

1. Schallabsorber mit einer Schallwellen absorbierenden Absorptionsschicht, welche hohlraumartige Kammern aufweist, bei dem die Kammern als solche rohrförmige bzw. kanalförmige schallabsorbierende Bauteile (13) in der Absorptionsschicht ausgebildet bzw. angeordnet sind, daß die offenen Enden (14) der Bauteile (13) dem Schalleinfall zugewandt sind und einen Durchmesser bzw. Breite aufweisen, der bzw. die wesentlich kleiner ist als die Länge der betreffenden Bauteile (13),
**dadurch gekennzeichnet,**
daß Hohlräume benachbarter Bauteile untereinander akustisch durch Verbindungskanäle (13e) verbunden sind.

2. Schallabsorber nach Anspruch 1,
**dadurch gekennzeichnet,**
daß Bauteile (13) aus einer Kunststoffolie tiefgezogen sind.

3. Schallabsorber nach Anspruch 1 oder 2,
**dadurch gekennzeichnet,**

daß rohrförmige Bauteile (13) als biegbare bzw. flexible Schläuche ausgebildet und mit mindestens einem ihrer Enden (13n, 13m) an einem Träger (1), einer Deckschicht (6) und/oder einem biegbaren Halter befestigt sind.

4. Schallabsorber nach einem der vorhergehenden Ansprüche,
**dadurch gekennzeichnet,**
die Bautiefe der Bauteile (13) mindestens der dreifachen Breite bzw. dem dreifachen Durchmesser derselben entspricht.

5. Schallabsorber nach einem der vorhergehenden Ansprüche,
**dadurch gekennzeichnet,**
daß Bauteile (13) eine selbsttragende Baueinheit bilden.

6. Schallabsorber nach einem der vorhergehenden Ansprüche,
**dadurch gekennzeichnet,**
daß die Bauteile (13) spritzgepreßt sind und aus Kunststoff bestehen.

7. Schallabsorber nach einem der vorhergehenden Ansprüche,
**dadurch gekennzeichnet,**
daß sich die Bauteile (13) bzw. Kanäle im wesentlichen in einer Ebene erstrecken, die parallel zur Oberfläche des Schallabsorbers an der dem Schallwelleneinfall zugewandten Seite verläuft.

8. Schallabsorber nach einem der vorhergehenden Ansprüche,
**dadurch gekennzeichnet,**
daß sich die Bauteile (13) bzw. Kanäle im wesentlichen in mehreren Ebenen erstrecken, die im wesentlichen parallel zur Oberfläche des Schallabsorbers an der dem Schallwelleneinfall zugewandten Seite verläuft.

9. Schallabsorber nach Anspruch 1,
**dadurch gekennzeichnet,**
daß die Absorptionsschicht poröses Absorbermaterial (2) aufweist.

10. Schallabsorber nach Anspruch 9,
**dadurch gekennzeichnet,**
daß das poröse Absorbermaterial (2) als Schicht aus Schaumstoff ausgebildet ist.

11. Schallabsorber nach Anspruch 9,
**dadurch gekennzeichnet,**
daß das poröse Absorbermaterial (2) als Vliesschicht ausgebildet ist.

12. Schallabsorber nach einem der vorhergehenden Ansprüche,
**dadurch gekennzeichnet,**
daß die Absorptionsschicht an der dem Träger (1) abgewandten Seite durch eine flüssigkeitsdichte Deckschicht (6) abgedeckt ist.

13. Schallabsorber nach einem der vorhergehenden Ansprüche,
**dadurch gekennzeichnet,**
daß die Bauteile (13) an den den offenen Enden (14) abgewandten Seiten (16) geschlossen und/oder von einem Träger (1) und/oder von porösem Absorbermaterial (2) abgedeckt sind.

## Claims

1. A sound absorber comprising an absorption layer absorbing sound waves, which layer comprises cavity-like chambers, wherein the chambers are configured or, respectively, disposed as such tube-shaped or, respectively, channel-shaped sound-absorbing structural components (13) in the absorption layer that the open ends (14) of the structural components (13) face the incident sound and comprise a diameter or, respectively, a width which is substantially smaller than the length of the respective structural components (13),
**characterised in**
that the cavities of adjacent structural components are acoustically connected with each other via connecting channels (13e).

2. A sound absorber according to claim 1,
**characterised in**
that the components (13) are deep-drawn from a plastic foil.

3. A sound absorber according to claim 1 or 2,
**characterised in**
that tube-shaped structural components (13) are formed as resilient or, respectively, flexible hoses and have at least one end thereof (13n, 13m) attached to a carrier (1), a cover layer (6) and/or a resilient holder.

4. A sound absorber according to any of the preceding claims,
**characterised in**
that the structural depth of the components (13) corresponds to at least the triple width or, respectively, the triple diameter thereof.

5. A sound absorber according to any of the preceding claims,
**characterised in**
that the structural components (13) constitute an unsupported basic unit.

6. A sound absorber according to any of the preceding claims,
**characterised in**
that the structural components (13) are transfer-moulded and consist of plastic material.

7. A sound absorber according to any of the preceding claims,
**characterised in**
that the structural components (13) or, respectively, the channels substantially extend in a plane lying in parallel with the surface of the sound absorber on the side facing the incident sound.

8. A sound absorber according to any of the preceding claims,
**characterised in**
that the structural components (13) or, respectively, the channels substantially extend in a plurality of planes lying substantially in parallel with the surface of the sound absorber on the side facing the incident sound.

9. A sound absorber according to claim 1,
**characterised in**
that the absorption layer comprises a porous absorber material (2).

10. A sound absorber according to claim 9,
**characterised in**
that the porous absorber material (2) is formed as a layer of foamed plastic.

11. A sound absorber according to claim 9,
**characterised in**
that the porous absorber material (2) is formed as a fleece layer.

12. A sound absorber according to any of the preceding claims,
**characterised in**
that the absorption layer is covered by a liquid-tight cover layer (6) on the side facing away from the carrier (1).

13. A sound absorber according to any of the preceding claims,
**characterised in**
that the structural components (13) are, on the sides (16) facing away from the open ends (14), closed and/or covered by a carrier (1) and/or by porous absorber material (2).

## Revendications

1. Absorbeur phonique avec une couche d'absorption absorbant des ondes sonores, qui présente des chambres du type de cavités, dans lequel les chambres sont formées ou disposées dans la couche d'absorption en tant que composants (13) absorbant le bruit, en forme de tubes ou de canaux, de manière que les extrémités (14) ouvertes des composants (13) soient tournées vers le bruit incident et présentent un diamètre ou une largeur qui est sensiblement inférieur à la longueur des composants (13) concernés,
caractérisé
en ce que des cavités de composants voisins sont reliées acoustiquement entre elles par des canaux de liaison (13e).

2. Absorbeur phonique selon la revendication 1,
caractérisé
en ce que des composants (13) sont obtenus par emboutissage profond d'une feuille de matière plastique.

3. Absorbeur phonique selon la revendication 1 ou 2,
caractérisé
en ce que des composants (13) tubulaires sont formés en tant que tuyaux cintrables ou flexibles et sont fixés, par au moins l'une de leurs extrémités (13n, 13m), sur un support (1), une couche de couverture (6) et/ou un appui flexible.

4. Absorbeur phonique selon l'une des revendications précédentes,
caractérisé
en ce que la profondeur de construction des composants (13) correspond au moins à trois fois la largeur ou à trois fois le diamètre de ceux-ci.

5. Absorbeur phonique selon l'une des revendications précédentes,
caractérisé
en ce que des composants (13) forment une unité de construction autoportante.

6. Absorbeur phonique selon l'une des revendications précédentes,
caractérisé
en ce que les composants (13) sont moulés par injection et sont faits d'une matière plastique.

7. Absorbeur phonique selon l'une des revendications précédentes,
caractérisé
en ce que les composants (13) ou les canaux s'étendent sensiblement dans un plan, qui est parallèle à la surface de l'absorbeur phonique sur le côté tourné vers les ondes sonores incidentes.

8. Absorbeur phonique selon l'une des revendications précédentes,
caractérisé

en ce que les composants (13) ou canaux s'étendent sensiblement dans plusieurs plans, qui sont sensiblement parallèles à la surface de l'absorbeur phonique, sur le côté tourné vers les ondes sonores incidentes.

9. Absorbeur phonique selon la revendication 1,
caractérisé
en ce que la couche d'absorption présente un matériau d'absorbeur (2) poreux.

10. Absorbeur phonique selon la revendication 9,
caractérisé
en ce que le matériau d'absorbeur (2) poreux est une couche en mousse.

11. Absorbeur phonique selon la revendication 9,
caractérisé
en ce que le matériau d'absorbeur (2) poreux est une couche de non-tissé.

12. Absorbeur phonique selon l'une des revendications précédentes,
caractérisé
en ce que la couche d'absorption est recouverte, sur le côté tourné à l'opposé du support (1), par une couche de couverture (6) étanche aux liquides.

13. Absorbeur phonique selon l'une des revendications précédentes,
caractérisé
en ce que sur les côtés (16) tournés à l'opposé des extrémités ouvertes (14), les composants (13) sont fermés et/ou recouverts par un support (1) et/ou par un matériau d'absorbeur (2) poreux.

# FIG. 1

# FIG. 2

# FIG. 3

# FIG. 4

# FIG. 5

## FIG. 6

## FIG. 7

## FIG. 8

# FIG. 9